(19) Europäisches Patentamt
European Patent Office
Office européen des brevets

(11) EP 0 613 916 B1

(12) EUROPÄISCHE PATENTSCHRIFT

(45) Veröffentlichungstag und Bekanntmachung des Hinweises auf die Patenterteilung:
**06.05.1999 Patentblatt 1999/18**

(51) Int Cl.[6]: **C08G 65/48**, C08L 71/10

(21) Anmeldenummer: **94102860.7**

(22) Anmeldetag: **25.02.1994**

(54) **Formmasse auf der Grundlage von Polyarylenethern mit Anhydridendgruppen**

Moulding composition based on anhydride-group terminated polyarylene ethers

Masse à mouler à base de poly(éthers d'arylène) ayant des groupes anhydrides terminaux

(84) Benannte Vertragsstaaten:
**BE DE ES FR GB IT NL**

(30) Priorität: **04.03.1993 DE 4306708**

(43) Veröffentlichungstag der Anmeldung:
**07.09.1994 Patentblatt 1994/36**

(73) Patentinhaber: **BASF Aktiengesellschaft
67063 Ludwigshafen (DE)**

(72) Erfinder:
- **Weber, Martin, Dr.
D-67433 Neustadt (DE)**
- **Muehlbach, Klaus, Dr.
D-67269 Gruenstadt (DE)**
- **Eberle, Wolfgang, Dr.
D-55124 Mainz (DE)**

(56) Entgegenhaltungen:
**EP-A- 0 004 136**
**EP-A- 0 144 966**
**EP-A- 0 318 698**
**EP-A- 0 320 646**
**DE-A- 4 110 460**
**DE-A- 4 114 455**
**US-A- 4 642 327**
**US-A- 4 668 744**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Formmassen auf der Grundlage von Polyarylenethern A mit Anhydridendgruppen und wiederkehrenden Einheiten I

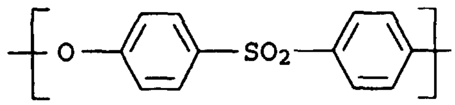

$(I_1)$

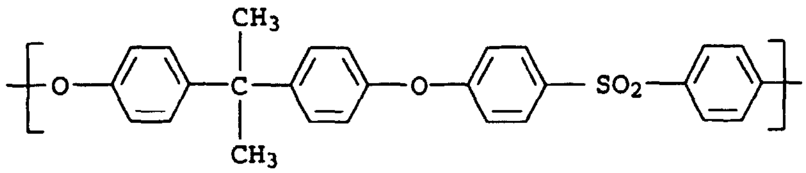

$(I_2)$

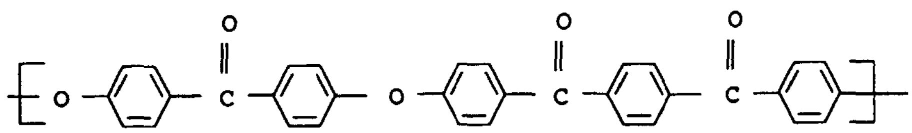

$(I_3)$

oder

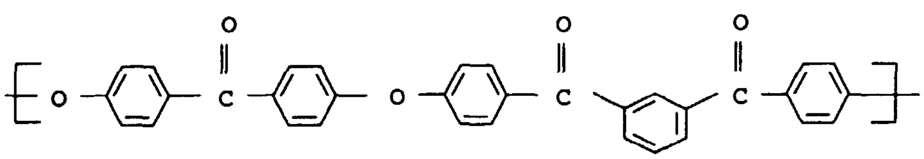

$(I_4)$

Ferner betrifft die vorliegende Erfindung ein Verfahren zur Herstellung dieser Formmassen sowie deren Verwendung.

Formmassen auf der Grundlage von Polyarylenethern mit sich wiederholenden Strukturelementen I sind an sich bekannt. Die bekannten Polyarylenether haben entweder Chlor- und/oder Hydroxyendgruppen. Im allgemeinen werden diese Endgruppen verkappt (siehe z.B. EP-A2-106 023), beispielsweise durch Verethern der Hydroxygruppe mit Halogenverbindungen, um beispielsweise unerwünschte Reaktionen der freien Hydroxygruppe bei erhöhten Temperaturen zu verhindern.

Darüber hinaus waren Formmassen bekannt, die Polyphenylenether mit Anhydridendgruppen enthalten (siehe US-A 4 600 741).

Aufgabe der vorliegenden Erfindung war es, Formmassen auf der Basis von Polyarylenethern mit wiederkehrenden Einheiten I zur Verfügung zu stellen, die insbesondere eine gute Klebefestigkeit aufweisen und als thermostabile Kleber verwendet werden können.

Diese Aufgabe wird durch die eingangs definierten Formmassen gelöst.

Polyarylenether A

Die erfindungsgemäßen Formmassen enthalten Polyarylenether A mit Anhydridendgruppen und wiederkehrenden Einheiten I. Sie können aber auch eine Mischung unterschiedlicher Polyarylenether A enthalten.

Zu den bevorzugten Formmassen zählen beispielsweise Formmassen, die als Komponente A Polyarylenether mit 5 bis 95 Mol-% wiederkehrende Einheiten $(I_1)$ und 5 bis 95 Mol-% wiederkehrende Einheiten $(I_2)$ enthalten.

Die Polyarylenether A können auch Co- oder Blockcopolymere sein, in denen Polyarylenethersegmente und Segmente von anderen thermoplastischen Polymeren wie Polyamiden, Polyestern, aromatischen Polycarbonaten,

Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether mittlere Molekulargewichte $\overline{M}_n$ (Zahlenmittel) im Bereich von 15 000 bis 60 000 g/mol und relative Viskositäten von 0,25 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96 %iger Schwefelsäure bei jeweils 20°C bzw. 25°C gemessen.

Erfindungsgemäß enthalten die Polyarylenether A Anhydridendgruppen der Struktur

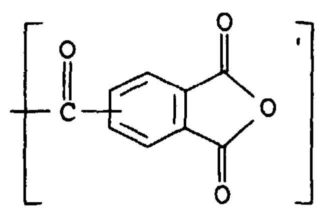

Diese lassen sich vorzugsweise durch Umsetzen von entsprechenden Polyarylenethern mit Hydroxyendgruppen und sich wiederholenden Strukturelementen I mit Anhydriden der allgemeinen Formel II

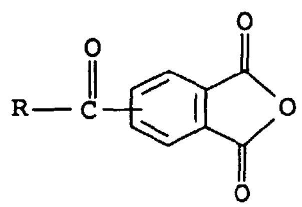

(II)

herstellen. Hierin kann R Chlor oder Brom, bevorzugt Chlor bedeuten. R kann aber auch eine $C_1$- bis $C_{10}$-Alkoxygruppe, vorzugsweise eine n-$C_1$- bis $C_{10}$-Alkoxygruppe, darstellen. Als Beispiele sind Methoxy, Ethoxy, n-Butoxy, i-Butoxy und n-Pentoxy zu nennen, worunter die n-Butoxygruppe bevorzugt wird. Daneben kann R auch eine $C_6$- bis $C_{10}$-Aryloxygruppe, bevorzugt Phenoxy sein. Die Alkoxy- oder Aryloxygruppen können sowohl unsubstituiert sein als auch Substituenten haben. Geeignete Substituenten sind beispielsweise Halogenatome wie Chlor, Brom oder insbesondere Fluor.

Trimellitsäureanhydridchlorid ($II_1$) und Trimellithsäureanhydrid-n-butylester (II2)

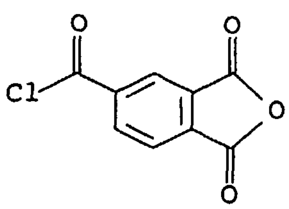

($II_1$)

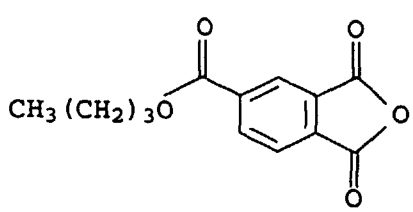

($II_2$)

werden als Anhydridkomponente besonders bevorzugt.

Bevorzugt werden Polyarylenether A, die erhältlich sind durch Umsetzen von 80 bis 99,5 Gew.-% Polyarylenethern mit Hydroxyendgruppen und wiederkehrenden Einheiten I mit 0,5 bis 20 Gew.-% einer Anhydridverbindung II.

Polyarylenether mit wiederkehrenden Einheiten I sind an sich bekannt und können nach bekannten Methoden hergestellt werden.

Sie entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US-A-3 441 538, 4 108 837, der DE-A1-27 38 962 und der EP-A1-361 beschrieben. Polyarylenether, die Carbonylfunktionen enthalten, sind auch durch elektrophile (Friedel-Crafts)-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethern sind beispielsweise in den EP-A-113 112 und 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Polyarylenether mit wiederkehrenden Einheiten I und Hydroxyendgruppen können beispielsweise durch geeignete Wahl des molaren Verhältnisses zwischen Dihydroxy- und Dichlormonomeren hergestellt werden (siehe z.B. J.E. McGrath et al: Polym. Eng. Sci. 17, 647 (1977); H.-G. Elias "Makromoleküle" 4. Aufl., S. 490-493, (1981), Hüthig & Wepf-Verlag, Basel).

Bevorzugt werden Polyarylenether mit wiederkehrenden Einheiten I verwendet, die 0,02 bis 2 Gew.-% Hydroxyendgruppen aufweisen. Ganz besonders werden solche bevorzugt, die 0,1 bis 1,5 Gew.-% Hydroxyendgruppen haben.

Die Umsetzung der hydroxyterminierten Polyarylenether mit den Anhydridverbindungen zu den Polyarylenethern A findet im allgemeinen in einem Lösungsmittel statt. Als Beispiele geeigneter organischer Lösungsmittel sind Chlorbenzol, Tetrahydrofuran, Dimethylformamid und N-Methylpyrrolidon zu nennen. Für die Umsetzungen sind im allgemeinen erhöhte Temperaturen erforderlich. In der Regel findet die Reaktion unterhalb einer Temperatur von 40°C nur langsam statt. Meist sind Temperaturen von 60°C oder darüber erforderlich. Im allgemeinen finden die Umsetzungen in einem Temperaturbereich von 60 bis 150°C statt. Höhere Temperaturen als 160°C sind meist nicht erforderlich. Vorzugsweise wird die Reaktion in Gegenwart eines Säureakzeptors durchgeführt, wenn die Anhydridverbindung ein abspaltbares Halogenatom enthält, wie Trimellitsäureanhydridchlorid $II_1$. Trialkylamine, in denen die Alkylreste jeweils 1 bis 20 Kohlenstoffatome haben können, sind beispielsweise als Säureakzeptor geeignet. Zu diesen zählen Trimethylamin, Triethylamin, Triisobutylamin, Triisooctylamin und cyclische Amine. Besonders bevorzugt wird Triethylamin verwendet. Wenn es sich bei der Reaktion der hydroxyterminierten Polyarylenether mit der Anhydridverbindung um eine Umesterung handelt, beispielsweise bei der Reaktion mit Trimellitsäureanhydrid-n-butylester II2, wird die Reaktion vorzugsweise in Gegenwart eines Umesterungskatalysators vorgenommen. Zu geeigneten Umesterungskatalysatoren zählen die für Umesterungen gebräuchlichen Phosphite, Titanate und organischen Zinnverbindungen sowie Antimonoxid. Die Reaktionsdauer beträgt im allgemeinen nicht weniger als 20 Minuten. Die Reaktion ist in der Regel nach 3 bis 4 Stunden beendet. Im allgemeinen beträgt die Reaktionszeit 30 bis 240 Minuten. Das Reaktionsprodukt wird vorzugsweise durch Ausfällen in einem Nichtlösungsmittel beispielsweise einem niedermolekularen Alkohol wie Methanol, Ethanol, Propanol oder Isopropanol oder auch Wasser sowie Mischungen derselben gewonnen. Es ist aber auch möglich, das Reaktionslösungsmittel aus dem Reaktionsprodukt, beispielsweise im Entgasungsextruder oder Dünnschichtverdampfer, zu entfernen und so das Reaktionsprodukt zu isolieren.

In einer weiteren bevorzugten Ausführungsform können die hydroxyterminierten Polyarylenether mit der Anhydridverbindung bei einer Temperatur von 270 bis 370°C, bevorzugt von 280 bis 350°C in der Schmelze in einem kontinuierlich oder absatzweise arbeitenden Mischaggregat (z.B. Ein- oder Zweiwellenextruder, Kneter) umgesetzt werden. Die Anhydridverbindung wird dabei, vorzugsweise in flüssiger Form oder gelöst in einem hochsiedenden Lösungsmittel, beispielsweise innerhalb der Knetzone eines Mischaggregats zur Schmelze des hydroxyterminierten Polyarylenethers zudosiert. Als hochsiedendes Lösungsmittel kommen insbesondere Dimethylformamid oder N-Methylpyrrolidon in Betracht. Für die Umsetzung in der Schmelze eignen sich insbesondere Trimellithsäureanhydridester. Ganz besonders bevorzugt wird Trimellithsäureanhydrid-n-butylester eingesetzt.

Der Anteil an Anhydridendgruppen im Polyarylenether A kann durch die bekannten Methoden der allgemeinen organischen Analytik wie Titration, IR-, UV- und NMR-Spektroskopie bestimmt werden.

Die erfindungsgemäßen Formmassen können neben den Polyarylenethern A noch weitere Komponenten enthalten, die im folgenden näher beschrieben werden.

In einer der bevorzugten Ausführungsformen enthalten die Formmassen die Komponenten

A) 5 bis 99 Gew.-%, insbesondere 5 bis 50 Gew.-% Polyarylenether A,
B) 0 bis 90 Gew.-%, insbesondere 15 bis 80 Gew.-% Polyarylenether B und
C) 1 bis 45 Gew.-%, insbesondere 10 bis 35 Gew.-% faser- oder teilchenförmige Verstärkungs- oder Füllstoffe

oder deren Mischungen, wobei sich die Summe der Komponenten A bis C jeweils zu 100 Gew.-% addiert.

In einer anderen bevorzugten Ausführungsform enthalten die Formmassen die Komponenten

A) 1 bis 99 Gew.-%, insbesondere 10 bis 90 Gew.-% Polyarylenether A,
B) 0 bis 90 Gew.-%, insbesondere 5 bis 80 Gew.-% Polyarylenether B,
C) 0 bis 45 Gew.-%, insbesondere 10 bis 35 Gew.-% faser- oder teilchenförmige Verstärkungs- oder Füllstoffe oder deren Mischungen,
D) 1 bis 99 Gew.-%, insbesondere 10 bis 90 Gew.-% thermoplastische Polyamide D und
E) 0 bis 25 Gew.-%, insbesondere 2 bis 20 Gew.-% schlagzähmodifizierende Kautschuke E, wobei sich die Summe der Komponenten A bis E jeweils zu 100 Gew.-% addiert.

Weitere erfindungsgemäße Formmassen, die bevorzugt werden, enthalten die Komponenten

A) 10 bis 88 Gew.-% Polyarylenether A
B) 0 bis 80 Gew.-% Polyarylenether B,
D) 10 bis 88 Gew.-% thermoplastische Polyamide D und
E) 2 bis 20 Gew.-% schlagzähmodifizierende Kautschuke E, wobei sich die Summe der Komponenten jeweils zu 100 Gew.-% addiert.

Komponente B

Neben den Polyarylenethern A können die erfindungsgemäßen Formmassen auch Polyarylenether B enthalten, deren Endgruppen sich von denen der Polyarylenether A unterscheiden und die wiederkehrenden Einheiten III

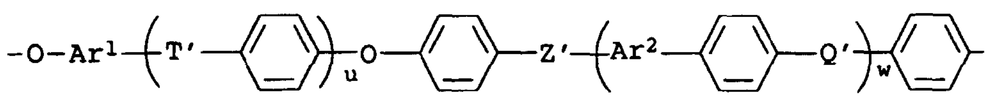 (III)

enthalten.

Dabei können u und w jeweils den Wert 0, 1, 2 oder 3 annehmen. T', Q' und Z' können unabhänging voneinander gleich oder verschieden sein. Sie können eine chemische Bindung oder eine Gruppe ausgewählt aus -O-, $-SO_2-$, -S-, C=O, -N=N- und S=O sein. Daneben können T', Q' und Z' auch für eine Gruppe der allgemeinen Formel $-R^aC=CR^b-$ oder $-CR^cR^d-$ stehen, wobei $R^a$ und $R^b$ jeweils Wasserstoff oder $C_1$ bis $C_{10}$-Alkylgruppen, $R^c$ und $R^d$ jeweils Wasserstoff, $C_1$-bis $C_{10}$-Alkyl- wie Methyl, Ethyl, n-Propyl, i-Propyl, t-Butyl, n-Hexyl, $C_1$- bis $C_{10}$-Alkoxy wie Methoxy, Ethoxy, n-Propoxy, i-Propoxy, n-Butoxy oder $C_6$- bis $C_{18}$-Arylgruppen wie Phenyl oder Naphthyl bedeuten. Bevorzugt werden Polyarylenether B, in denen T', Q' und Z' -O-, $-SO_2-$, C=O, eine chemische Bindung oder eine Gruppe der Formel $-CR^cR^d$ bedeuten. Zu den bevorzugten Resten $R^c$ und $R^d$ zählen Wasserstoff und Methyl. Von den Gruppen T', Q' und Z' bedeutet mindestens eine $-SO_2-$ oder C=O. $Ar^1$ und $Ar^2$ stehen für C6- bis $C_{18}$-Arylgruppen, wie 1,5-Naphthyl, 1,6-Naphthyl, 2,7-Naphthyl, 1,5-Anthryl, 9,10-Anthryl, 2,6-Anthryl, 2,7-Anthryl oder Biphenyl, insbesondere Phenyl. Vorzugsweise sind diese Arylgruppen nicht substituiert. Sie können jedoch Substituenten ausgewählt aus $C_1$- bis $C_{10}$-Alkyl- wie Methyl, Ethyl, n-Propyl, 1-Propyl, t-Butyl, n-Hexyl, $C_6$- bis $C_{18}$-Aryl wie Phenyl oder Naphthyl, $C_1$- bis $C_{10}$-Alkoxyreste wie Methoxy, Ethoxy, n-Propoxy, i-Propoxy, n-Butoxy und Halogenatome haben. Zu den davon bevorzugten Substituenten gehören Methyl, Phenyl, Methoxy und Chlor.

Einige geeignete wiederkehrende Einheiten sind im folgenden aufgeführt:

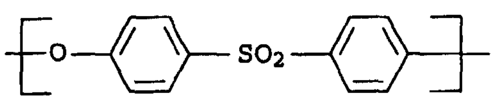

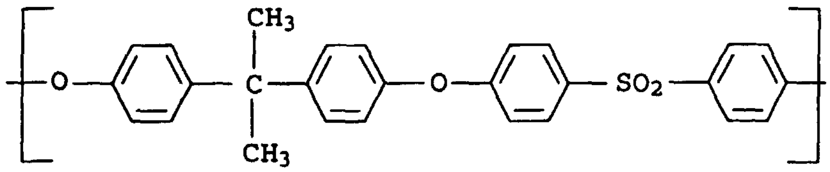

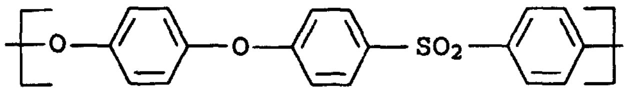

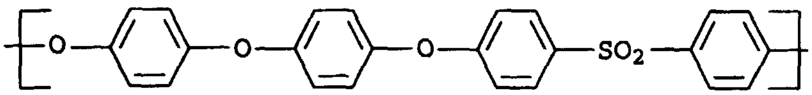

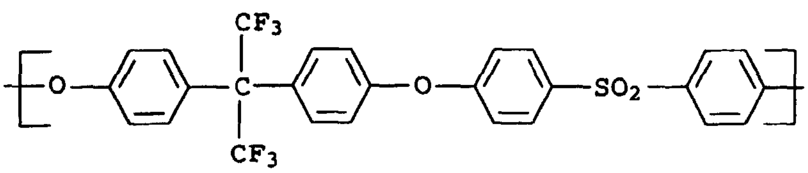

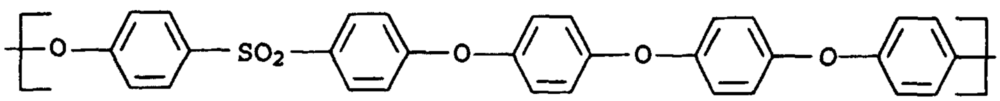

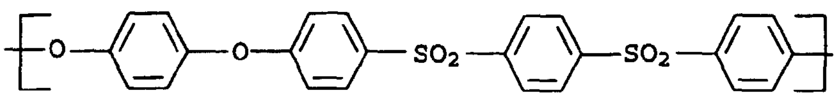

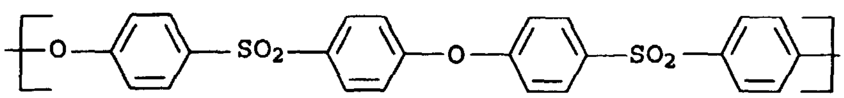

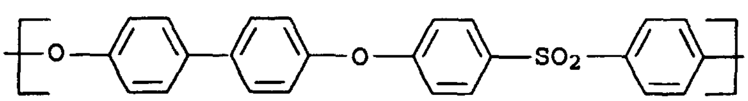

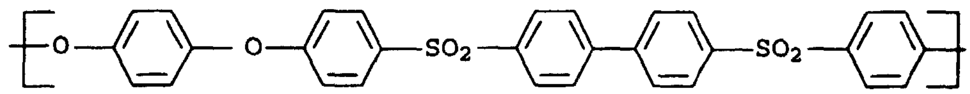

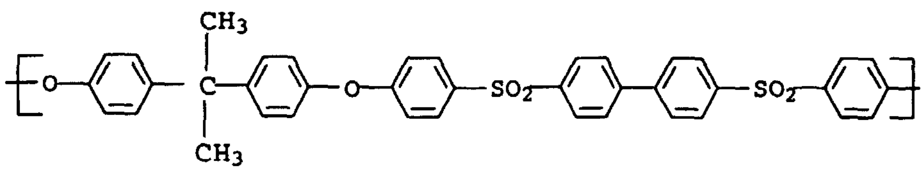

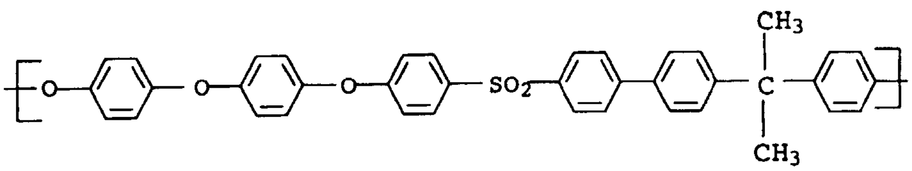

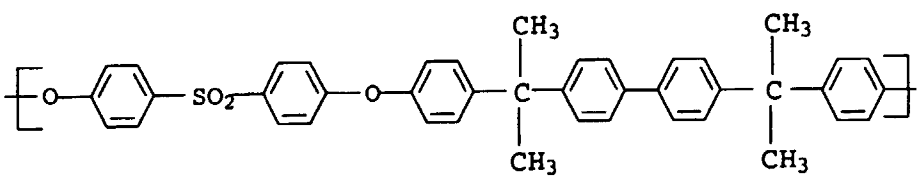

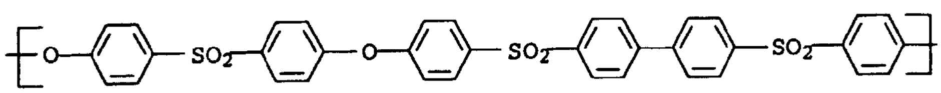

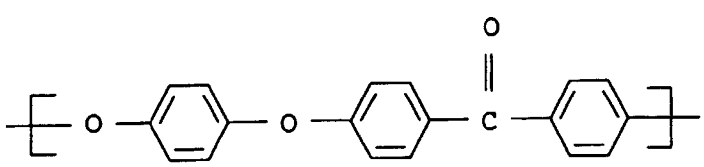

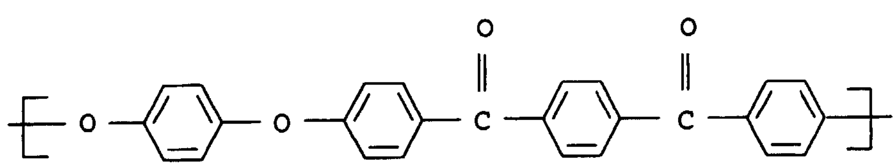

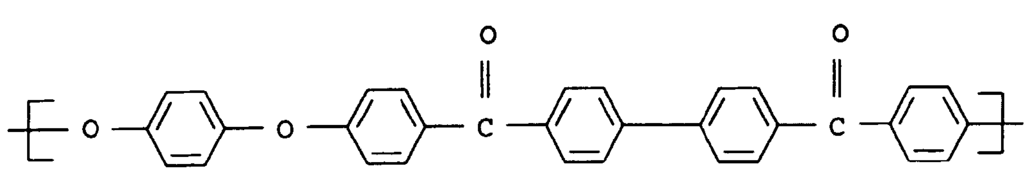

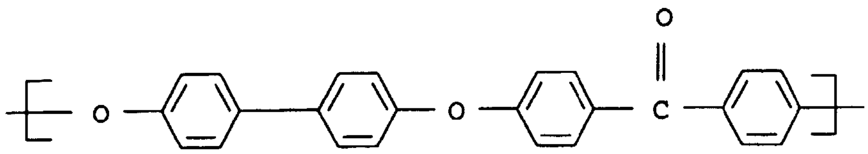

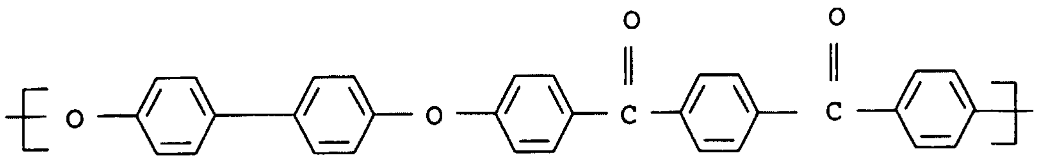

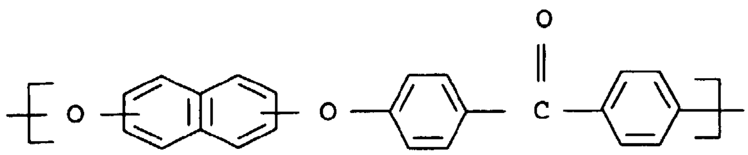

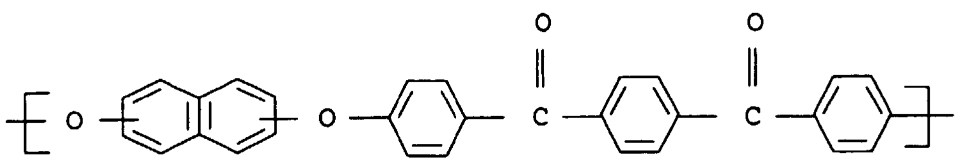

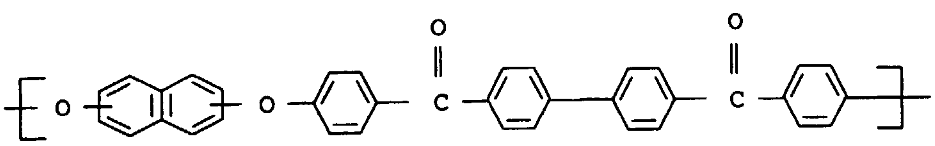

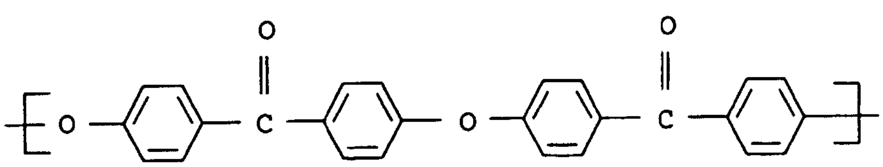

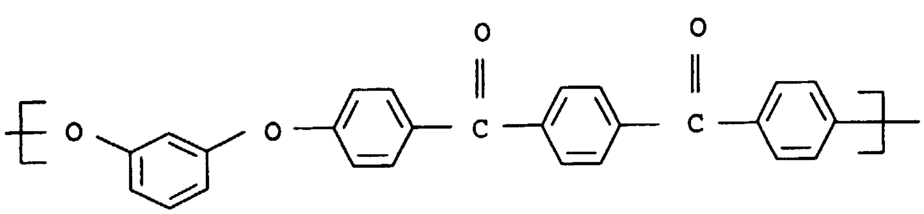

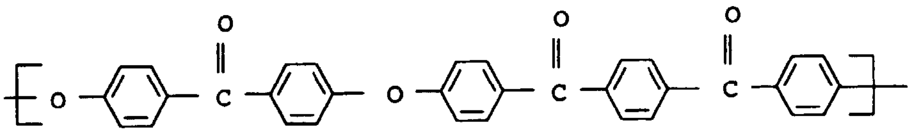

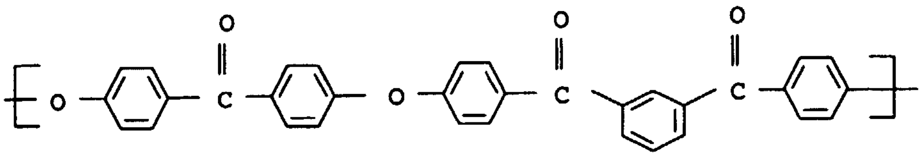

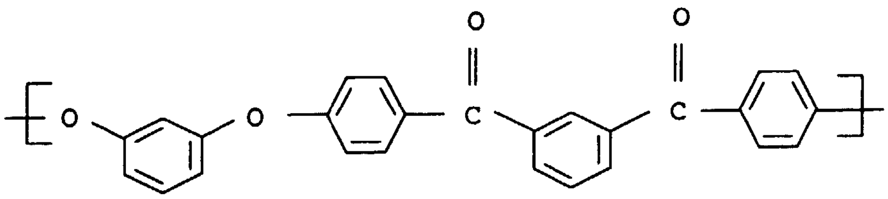

Als Komponente B können auch Polyarylenethersegmente enthaltende Copolymere eingesetzt werden.
Die Polyarylenether B können beispielsweise Halogen-, Methoxy-, Hydroxy-, Phenoxy-, Benzyloxy- oder Aminoendgruppen enthalten. Bevorzugt werden Polyarylenether B mit Halogen- oder Methoxyendgruppen verwendet.
Diese Polyarylenether B sind, wie vorstehend angegeben, bekannt oder nach bekannten Methoden erhältlich.
Die Polyarylenether B können in den erfindungsgemäßen Formmassen mit einem Anteil von 0 bis zu 90, vorzugsweise bis 0 zu 80 Gew.-% vorhanden sein.

Komponente C

Neben den Komponenten A und B können die erfindungsgemäßen Formmassen noch Verstärkungsmittel oder Füllstoffe enthalten. Als Komponente C können die erfindungsgemäßen Formmassen z.B. bis 45, vorzugsweise 10 bis 35 Gew.-% faser- oder teilchenförmige Füllstoffe oder Verstärkungsstoffe oder deren Mischungen enthalten.
Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.
Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.
Kohlenstoff- oder Glasfasern können auch in Form von Geweben, Matten oder Glasseidenrovings eingesetzt werden.
Als teilchenförmige Füllstoffe eignen sich amorphe Kieselsäure, Asbest, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).
Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Komponente D

Neben den Komponenten A bis C können die erfindungsgemäßen Formmassen auch noch thermoplastische Polyamide enthalten. Die als Komponente D in den Massen enthaltenen Polyamide sind ebenfalls bekannt und umfassen teilkristalline und amorphe Harze mit einem Molekulargewicht (Gewichtsmittelwert) von mindestens 5000, die gewöhnlich als Nylon bezeichnet werden. Solche Polyamide sind z.B. in den US-Patentschriften 2 071 250, 2 071 251, 2 130 523, 2 130 948, 2 241 322, 2 312 966, 2 512 606 und 3 393 210 beschrieben.
Die Polyamide D können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren bzw. Polyaddition von entsprechenden Lactamen hergestellt werden.

Beispiele für derartige Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt von 0 bis 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, von 0 bis 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z.B. nach dem in den EP-A-129 195 und EP 129 196 beschriebenen Verfahren erfolgen.

Bevorzugte teilaromatische Polyamide sind solche, die einen Gehalt an Triamineinheiten, insbesondere Einheiten des Dihexamethylentriamins von unter 0,5 Gew.-% aufweisen. Besonders bevorzugt werden solche teilaromatischen Polyamide mit Triamingehalten von 0,3 Gew.-% oder weniger.

Bevorzugt werden lineare Polyamide mit einem Schmelzpunkt über 200°C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.-%igen Lösung in 96 %iger Schwefelsäure bei 23°C, was einem Molekulargewicht (Zahlenmittel) von etwa 15 000 bis 45 000 entspricht. Polyamide mit einer relativen Viskosität von 2,4 bis 3,5, insbesondere 2,5 bis 3,4, werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Der Anteil der Polyamide D an den erfindungsgemäßen Formmassen kann 1 bis 99, vorzugsweise 10 bis 90 und insbesondere 10 bis 40 Gew.-% betragen.

Komponente E

Neben den Komponenten A bis D können die erfindungsgemäßen Formmassen auch von 0 bis 25, vorzugsweise 2 bis 20 Gew.-% eines schlagzähmodifizierenden Kautschuks E enthalten. Es können übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepropft werden.

Weiterhin seien Copolymere von $\alpha$-Olefinen genannt. Bei den $\alpha$-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl (meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-$\alpha$-Olefin hergestellt werden. Der Anteil des $\alpha$-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, $\alpha$-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl (meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Neben den beschriebenen Bestandteilen A bis E können die erfindungsgemäßen Formmassen noch z.B. bis 40 Gew.-% weiterer Additive wie Flammschutzmittel und Stabilisatoren enthalten.

Die erfindungsgemäßen Formmassen können nach an sich bekannten Verfahren, beispielsweise Extrusion, hergestellt werden.

Enthalten die erfindungsgemäßen thermoplastischen Formmassen neben den Polyarylethern A weitere Bestandteile, so können die Formmassen z.B. hergestellt werden, indem man die Ausgangskomponenten in üblichen Mischvorrichtungen wie Schneckenextrudern, vorzugsweise Zweischneckenextrudern, Brabender-Mühlen oder Banburry-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu

sind im allgemeinen mittlere Mischzeiten von 0,2 bis 30 Minuten bei Temperaturen von 280 bis 380°C erforderlich.

Die erfindungsgemäßen Formmassen auf der Grundlage der Polyarylenether A zeichnen sich durch hohe Klebefestigkeiten aus und eignen sich daher als thermostabile Kleber. Darüber hinaus weisen die füllstoffhaltigen Formmassen sehr gute Zähigkeiten und Festigkeiten auf. Sie eignen sich daher beispielsweise auch zum Herstellen von Formteilen, die hohen mechanischen Belastungen oder chemischen Einflüssen ausgesetzt sind.

Beispiele

In den folgenden Beispielen wurde der Anteil an Trimellitsäureanhydridendgruppen durch FT-IR-Spektroskopie bestimmt. Die Viskositätszahl (VZ) der Produkte wurde in 1 %iger Lösung in N-Methylpyrrolidon bei 25°C bestimmt. Die Hydroxyl-Endgruppenkonzentration der Komponente B wurde durch potentiometrische Titration in Dimethylformamid mit methanolischer KOH-Lösung gemessen.

Synthese von Polyarylenethern A mit Anhydridendgruppen

Beispiel 1

400 g eines Polyarylenethers aus 4,4'-Di-(4-hydroxyphenyl)sulfon und 4,4'-Dichlordiphenylsulfon (VZ = 55 ml/g, 0,12 Gew.-% OH-Endgruppen) wurden in 1200 ml N-Methylpyrrolidon (abs.) gelöst. Anschließend wurde die Lösung auf 80°C erwärmt. Nach Zugabe von 5,1 g Triethylamin wurde über einen Zeitraum von 30 Minuten 10,5 g Trimellitsäureanhydridchlorid, gelöst in 50 ml THF, zugegeben. Nach beendeter Zugabe wurde die Reaktionsmischung noch 2 Stunden bei 80°C gehalten. Das Reaktionsprodukt wurde durch Fällung in Wasser isoliert.

Der durch FT-IR bestimmte Gehalt an Trimellitsäureanhydridendgruppen betrug 1,45 Gew.-%. Die Viskositätszahl des Produktes betrug 55 ml/g.

Beispiel 1a

10 kg des Polyarylenethersulfons aus Beispiel 1 und 180 g Trimellitsäureanhydrid-n-butylester und 1 g $Sb_2O_3$ wurden bei einer Massetemperatur von 330°C auf einem Zweiwellenextruder bei einem Durchsatz von 10 kg/h gemischt.

Der durch FT-IR bestimmte Gehalt an Trimellitsäureanhydridendgruppen betrug 1,35 Gew.-%. Die Viskositätszahl des erhaltenen Produktes betrug 57 ml/g.

Beispiel 2

400 g eines Polyarylenethers aus 4,4'-Di-(4-hydroxyphenyl)sulfon und 4,4'-Dichlordiphenylsulfon (VZ = 44 ml/g, 0,25 Gew.-% OH-Endgruppen) wurden in 1200 ml N-Methylpyrrolidon (abs.) gelöst. Anschließend wurde die Lösung auf 80°C erwärmt. Nach Zugabe von 12,4 g Triethylamin wurde über einen Zeitraum von 30 Minuten 25,8 g Trimellitsäureanhydridchlorid, gelöst in 100 ml THF, zugegeben. Nach beendeter Zugabe wurde die Reaktionsmischung noch 2 Stunden bei 80°C gehalten. Das Reaktionsprodukt wurde durch Fällung in Wasser isoliert.

Der durch FT-IR bestimmte Gehalt an Trimellitsäureanhydridendgruppen betrug 2,49 Gew.-%. Die Viskositätszahl des erhaltenen Produktes betrug 45 ml/g.

Beispiel 3

400 g eines Polyarylenethers aus 2,2-Di-(4-hydroxyphenyl)propan (Bisphenol A) und 4,4'-Dichlordiphenylsulfon (VZ = 61 ml/g, 0,09 Gew.-% OH-Endgruppen wurden in 1200 ml N-Methylpyrrolidon (abs.) gelöst. Anschließend wurde die Lösung auf 80°C erwärmt. Nach Zugabe von 4,5 g Triethylamin wurde über einen Zeitraum von 30 Minuten 9,3 g Trimellitsäureanhydridchlorid, gelöst in 50 ml THF, zugegeben. Nach beendeter Zugabe wurde die Reaktionsmischung noch 2 Stunden bei 80°C gehalten. Das Reaktionsprodukt wurde durch Fällung in Wasser isoliert.

Der durch FT-IR bestimmte Gehalt an Trimellitsäureanhydridendgruppen betrug 0,98 Gew.-%. Die Viskositätszahl des erhaltenen Produktes betrug 60 ml/g.

Beispiel 4

400 g eines Polyarylenethers aus 2,2-Di-(4-hydroxyphenyl)propan (Bisphenol A) und 4,4'-Dichlordiphenylsulfon (VZ=42 ml/g, 0,28 Gew.-% OH-Endgruppen wurden in 1200 ml N-Methylpyrrolidon (abs.) gelöst, die Lösung wurde auf 80°C erwärmt. Nach Zugabe von 13,5 g Triethylamin wurde über einen Zeitraum von 30 Minuten 28 g Trimellitsäureanhydridchlorid, gelöst in 50 ml THF, zugegeben. Nach beendeter Zugabe wurde die Reaktionsmischung

noch 2 Stunden bei 80°C gehalten. Das Reaktionsprodukt wurde durch Fällung in Wasser isoliert.

Der durch FT-IR bestimmte Gehalt an Trimellitsäureanhydridendgruppen betrug 2,7 Gew.-%. Die Viskositätszahl des erhaltenen Produktes betrug 42 ml/g.

Anwendungstechnische Prüfungen

Die Klebefestigkeit der, wie in den Beispielen 1 bis 5 beschrieben hergestellten, Polyarylenether mit Anhydridendgruppen wurde in folgendem Test geprüft: 2 Metallplatten wurden bei 300 bis 350°C mit der Formmasse verklebt (Kontaktfläche 2 x 2 cm); dazu wurden jeweils 0,6 g Polymer-Pulver verwendet und die Platten mit stets gleichem Druck zusammengebracht. Die zum Trennen der Platten benötigte Kraft (Klebefestigkeit) wurde in einem Zugversuch bei einer Dehngeschwindigkeit von 0,1 cm/min bestimmt.

Die Ergebnisse der Prüfungen sind in der nachstehenden Tabelle aufgeführt. Die Vergleichsversuche beziehen sich auf die unveränderten Polymeren mit Hydroxylendgruppen.

Tabelle 1

| Formmassen als thermostabile Kleber | | | |
|---|---|---|---|
| Beispiel | VZ [ml/g] | Gew.-% TMA* | Klebefestigkeit [N/$mm^2$] |
| 1 | 55 | 1,45 | 4300 |
| V1 | 55 | - | 3400 |
| 1a | 57 | 1,35 | 4150 |
| 2 | 45 | 2,49 | 4650 |
| V2 | 44 | - | 3600 |
| 3 | 60 | 0,98 | 3900 |
| V3 | 61 | - | 3200 |
| 4 | 42 | 2,7 | 4400 |
| V4 | 42 | - | 3550 |

*TMA = Trimellitsäureanhydrid
V1 bis V4: Vergleichsversuche

Die Polyarylenether mit Anhydridendgruppen weisen gegenüber denen ohne Anhydridgruppen stark erhöhte Klebefestigkeiten auf.

Glasfaserverstärkte erfindungsgemäße Formmassen (Beispiele 5 bis 10)

Komponente $A_1$

Herstellung siehe Beispiel 1a

Komponente $A_2$

Herstellung siehe Beispiel 3

Komponente $B_1$

Polyarylenether aus 4,4'-Dihydroxydiphenylsulfon und 4,4'-Dichlordiphenylsulfon (VZ = 59 ml/g, gemessen in 1 %iger Lösung eines 1:1-Gemisches von Phenol und 1,2-Dichlorbenzol; z.B. Handelsprodukt Ultrason® E 2010, BASF).

Komponente $B_2$

Polyarylenether aus Bisphenol A und 4,4'-Dichlordiphenylsulfon (VZ = 64 ml/g, gemessen in 1 %iger Lösung in einem 1:1-Gemisch von Phenol und 1,2-Dichlorbenzol; z.B. Handelsprodukt Ultrason® S 2010, BASF).

Komponente C

Glasfaserrovings einer Dicke von 10 µm aus E-Glas, die mit einer Schlichte aus Polyurethan ausgerüstet waren. Nach dem Einarbeiten lagen die mittleren Längen der Glasfasern etwa zwischen 0,1 und 0,5 mm.

Herstellung der glasfaserverstärkten Formmassen

Die Komponenten A, B und C wurden in einem Zweiwellenextruder bei einer Massetemperatur von 310 bis 340°C gemischt. Die Schmelze wurde durch ein Wasserbad geleitet und granuliert.
Das getrocknete Granulat wurde bei 310 bis 340°C zu Normkleinstäben (50 x 6 x 4 mm) und Schulterstäben verarbeitet.
Die Schlagzähigkeit wurde an Normkleinstäben nach DIN 53 453 bestimmt, E-Modul und Zugfestigkeit wurden im Zugversuch nach DIN 53 455 an Schulterstäben bestimmt.
Die Zusammensetzungen der Formmassen und die Ergebnisse der anwendungstechnischen Prüfungen sind Tabelle 2 zu entnehmen.

Tabelle 2:

| Glasfaserverstärkte Formmassen | | | | | | | | |
|---|---|---|---|---|---|---|---|---|
| Formmasse Nr. | 5 | 6 | 7 | 8 | 9 | 10 | V5 | V6 |
| Komponente [Gew.-%] | | | | | | | | |
| $A_1$ | 5 | 10 | 20 | - | - | - | - | - |
| $A_2$ | - | - | - | 5 | 10 | 20 | - | - |
| $B_1$ | 75 | 70 | 60 | - | - | - | 80 | - |
| $B_2$ | - | - | - | 75 | 70 | 60 | - | 80 |
| C | 20 | 20 | 20 | 20 | 20 | 20 | 20 | 20 |
| Schlagzähigkeit [kJ/m$^2$] | 28,1 | 30,2 | 33,4 | 27,0 | 29,4 | 32,1 | 24,3 | 25,1 |
| E-Modul [N/mm$^2$] | 7700 | 7800 | 7750 | 7050 | 7100 | 7000 | 7650 | 7100 |
| Zugfestigkeit [N/mm$^2$] | 144 | 147 | 151 | 119 | 125 | 130 | 137 | 114 |

V5; V6: Vergleichsversuche

Aus den Versuchen geht hervor, daß die erfindungsgemäßen glasfaserverstärkten Formmassen gegenüber glasfaserverstärkten Formmassen auf der Basis von Polyarylenethern, die keine Anhydridendgruppen aufweisen, höhere Schlagzähigkeiten und Zugfestigkeiten aufweisen und die E-Moduli in der gleichen Größenordnung oder darüber liegen.
Polyamide enthaltende erfindungsgemäße Formmassen (Beispiele 11-20)

Komponente $D_1$

Polyhexamethylenadipinsäureamid mit einem K-Wert (nach Fikentscher) von 76, entsprechend einer relativen Viskosität $\eta_{rel}$ von 2,95, gemessen 1 gew.-%ig in 96 %iger Schwefelsäure.

Komponente $D_2$

Teilaromatisches Copolyamid, kondensiert aus 55 Gewichts-Teilen Terephthalsäure, 35 Teilen ε-Caprolactam und 38,5 Teilen Hexamethylendiamin, charakterisiert durch eine relative Viskosität von 2,4 (gemessen 1 gew.-%ig in 96 %iger Schwefelsäure) und einem Triamingehalt von 0,27 Gew.-%.

Komponente E

Ethylen-Propylen-Kautschuk, mit 0,7 Gew.-% Maleinsäure/Maleinsäureanhydrid modifiziert, gekennzeichnet durch einen MFI-Wert von 3 g pro 10 min (gemessen bei 2,16 kg/230°C).

Herstellung der Formmassen

Die Bestandteile wurden in einem Zweiwellenextruder bei einer Massetemperatur von 310 bis 340°C gemischt. Die Schmelze wurde durch ein Wasserbad geleitet und granuliert.

Das getrocknete Granulat wurde bei 310 bis 330°C zu Rundscheiben (60 x 2 mm) und Normkleinstäben zur Ermittlung der Durchstoßarbeit nach DIN 53 443 an Rundscheiben bzw. der Kerbschlagzähigkeit an Normkleinstäben nach DIN 53 453 gespritzt.

Zusammensetzung der Formmassen und Ergebnisse der Messungen sind den Tabellen 3 und 4 zu entnehmen.

Tabelle 3

| Polyamid-haltige Formmassen | | | | | | | | |
|---|---|---|---|---|---|---|---|---|
| Formmasse Nr. | 11 | V7 | 12 | V8 | 13 | 14 | 15 | V9 |
| Komponente [Gew.-%] | | | | | | | | |
| $A_1$ | 15 | - | 15 | - | 10 | 30 | 66 | - |
| $B_1$ | 69 | 84 | 51 | 66 | 56 | 36 | - | 66 |
| $D_1$ | 16 | 16 | - | - | - | - | - | - |
| $D_2$ | - | - | 34 | 34 | 28 | 28 | 28 | 28 |
| E | - | - | - | - | 6 | 6 | 6 | 6 |
| Durchstoßarbeit [Nm] | 23 | 0,5 | 31 | 1 | 62 | 61 | 65 | 1 |
| Kerbschlagzähigkeit [kJ/m$^2$] | 2,9 | 1,0 | 3,0 | 1 | 3,4 | 6,9 | 13,4 | 1,2 |

Tabelle 4

| Polyamid-haltige Formmassen | | | | | | | | |
|---|---|---|---|---|---|---|---|---|
| Formmasse Nr. | 16 | V10 | 17 | V11 | 18 | 19 | 20 | V12 |
| Komponente [Gew.-%] | | | | | | | | |
| $A_2$ | 15 | - | 10 | 30 | 66 | - | 15 | - |
| $B_2$ | 69 | 84 | 56 | 36 | - | 66 | 51 | 66 |
| $D_1$ | 16 | 16 | - | - | - | - | - | - |
| $D_2$ | - | - | 28 | 28 | 28 | 28 | 34 | 34 |
| E | - | - | 6 | 6 | 6 | 6 | - | - |
| Durchstoßarbeit [Nm] | 19 | 2 | 64 | 60 | 68 | 1,8 | 29 | 1,6 |
| Kerbschlagzähigkeit [kJ/m$^2$] | 4,3 | 2,6 | 4,1 | 6,3 | 12,4 | 1,7 | 3,2 | 2,1 |
| V7 bis V12: Vergleichsversuche | | | | | | | | |

Die erfindungsgemäßen Formmassen zeichnen sich durch erhöhte Durchstoßarbeit und verbesserte Kerbschlagzähigkeit aus.

**Patentansprüche**

1. Formmassen auf der Grundlage von Polyarylenethern A mit Anhydridendgruppen und wiederkehrenden Einheiten I

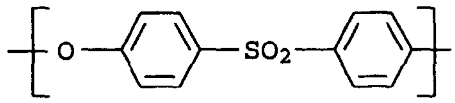

(I1)

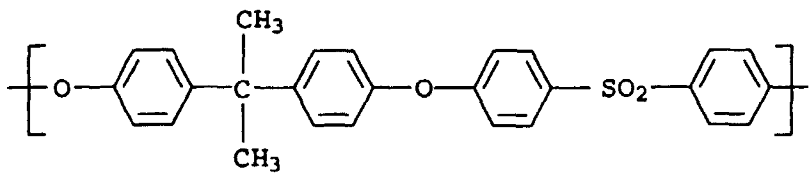

(I2)

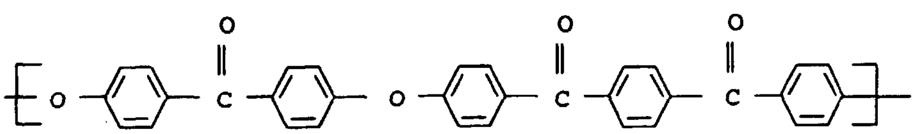

(I3)

oder

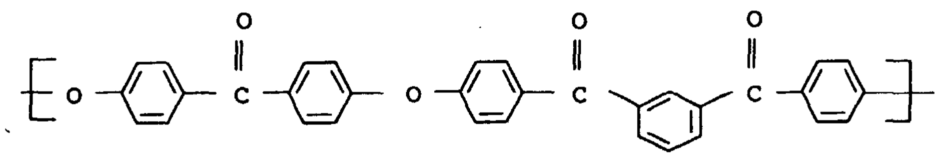

(I4)

erhältlich durch Umsetzen von Polyarylenethern mit Hydroxyendgruppen und wiederkehrenden Einheiten I mit Anhydridverbindungen der allgemeinen Formel II

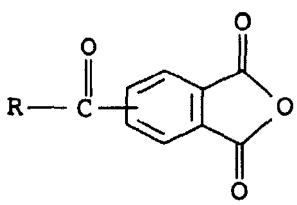

(II)

in der R, Cl, Br, eine $C_1$- bis $C_{10}$-Alkoxygruppe, die sowohl unsubstituiert oder substituiert sein kann oder eine $C_6$- bis $C_{10}$-Aryloxygruppe, die sowohl unsubstituiert als auch substituiert sein kann, ist.

**2.** Formmassen nach Anspruch 1 auf der Grundlage von Polyarylenethern A mit

5 bis 95 Mol-% wiederkehrende Einheiten $I_1$

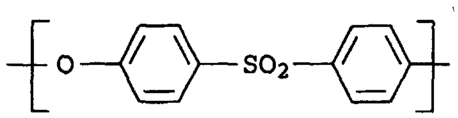

(I1)

und

5 bis 95 Mol-% wiederkehrender Einheiten $I_2$

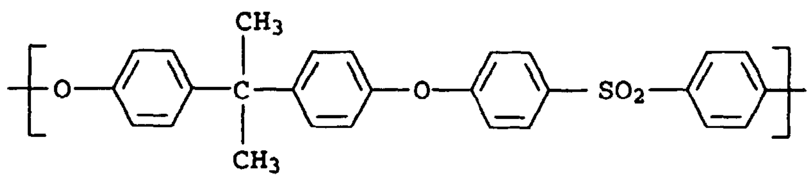

$(I_2)$.

**3.** Formmassen nach Anspruch 1 oder 2, wobei als Anhydridverbindung Trimellitsäureanhydridchlorid ($II_1$) oder Trimellitsäureanhydrid-n-butylester ($II_2$)

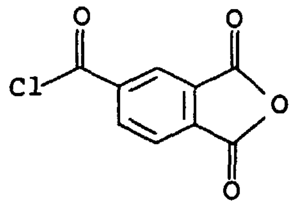

oder

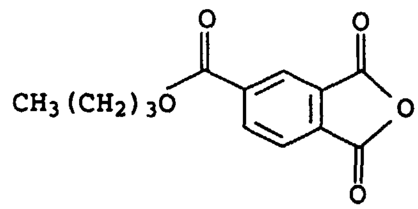

$(II_1)$ $(II_2)$

eingesetzt wird.

**4.** Formmassen nach einem der Ansprüche 1 bis 3, enthaltend, bezogen auf die Summe der Komponenten A bis C

A) 5 bis 99 Gew.-% Polyarylenether A,

B) 0 bis 90 Gew.-% Polyarylenether B mit Endgruppen, die sich von denen der Polyarylenether A unterscheiden, und mit wiederkehrenden Einheiten III

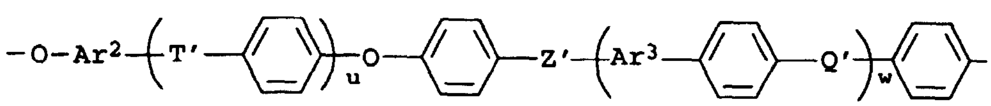

(III)

in denen u und w jeweils eine ganze Zahl 0, 1, 2 oder 3 bedeuten können,

T', Q' und Z' jeweils eine chemische Bindung oder eine Gruppe ausgewählt aus -O-, -S-, $-SO_2-$, S=O, -N=N-, $-R^aC=CR^b-$ und $-CR^cR^d-$ sein können, mit der Maßgabe, daß mindestens eine der Gruppen T', Q' oder Z' $-SO_2-$ oder C=O bedeutet,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, bedeuten,

$Ar^1$ und $Ar^2$ für $C_6$- bis $C_{18}$-Arylgruppen stehen, wobei diese Substituenten haben können, ausgewählt aus $C_1$- bis $C_{10}$-Alkyl, $C_6$- bis $C_{18}$-Aryl, $C_1$- bis $C_{10}$-Alkoxy und Halogen

C) 1 bis 45 Gew.-% faser- oder teilchenförmige Verstärkungs- oder Füllstoffe oder deren Mischungen,

wobei sich die Summe der Komponenten A bis C jeweils zu 100 Gew.-% addiert.

**5.** Formmassen nach einem der Ansprüche 1 bis 3, enthaltend, bezogen auf die Summe der Komponenten A bis E

A) 1 bis 99 Gew.-% Polyarylenether A,

B) 0 bis 90 Gew.-% Polyarylenether B,

C) 0 bis 45 Gew.-% faser- oder teilchenförmiger Verstärkungs- oder Füllstoffe oder deren Mischungen,

D) 1 bis 99 Gew.-% thermoplastische Polyamide D und

E) 0 bis 25 Gew.-% schlagzähmodifizierende Kautschuke E.

**6.** Formmassen nach Anspruch 5, enthaltend Polyamide D aus, bezogen auf das Polyamid D,

40 bis 90 Gew.-% Einheiten, die sich von Terephthalsäure und Hexamethylendiamin ableiten,
0 bis 50 Gew.-% Einheiten, die sich von ε-Caprolactam ableiten und/oder
0 bis 60 Gew.-% Einheiten, die sich von Adipinsäure und Hexamethylendiamin ableiten.

**7.** Verfahren zur Herstellung von Formmassen, auf der Grundlage von Polyarylenethern A mit Anhydridendgruppen und wiederkehrenden Einheiten I

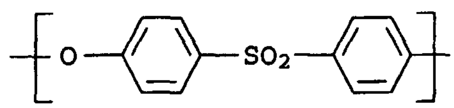

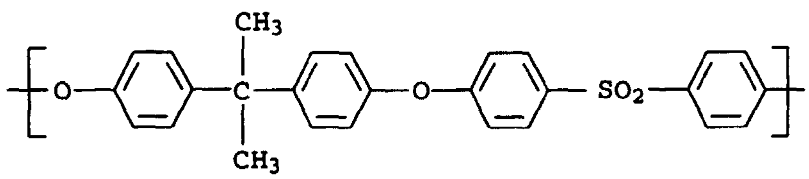

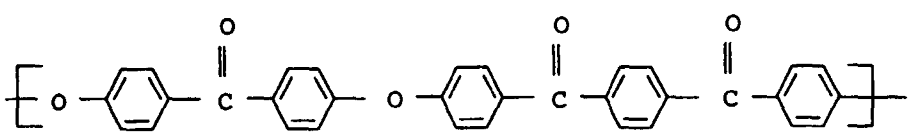

oder

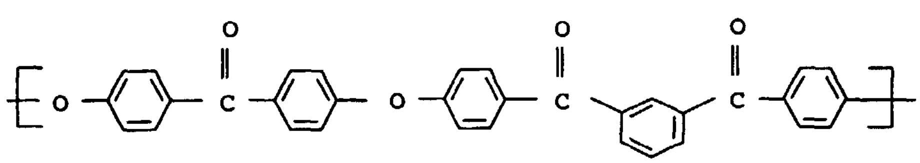

oder deren statistische Copolymerisate oder Blockcopolymerisate, wobei die Polyarylenether A auch als Co- oder Blockcopolymerisate mit anderen thermoplastischen Polymeren vorliegen,
dadurch gekennzeichnet, daß man Polyarylenether mit Hydroxyendgruppen und wiederkehrenden Einheiten I mit Anhydridverbindungen der allgemeinen Formel II umsetzt.

**8.** Verwendung der Formmassen gemäß Anspruch 1 zur Herstellung thermostabiler Kleber.

**9.** Thermostabile Kleber erhältlich unter Verwendung der Formmassen gemäß Anspruch 1 als wesentliche Komponente.

## Claims

**1.** A molding material based on polyarylene ethers A having terminal anhydride groups and repeating units I

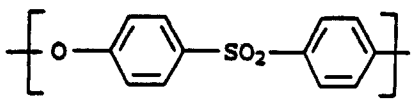

**($I_1$)**

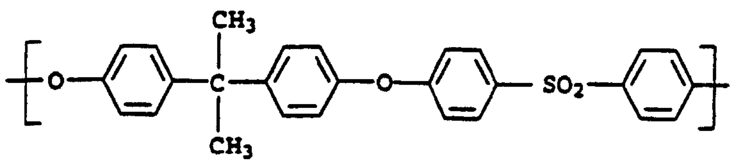

**($I_2$)**

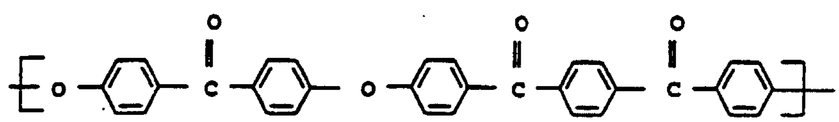

**($I_3$)**

or

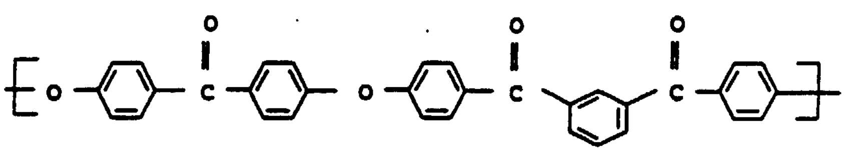

**($I_4$)**

obtainable by reacting polyarylene ethers having terminal hydroxyl groups and repeating units I with anhydride compounds of the formula II

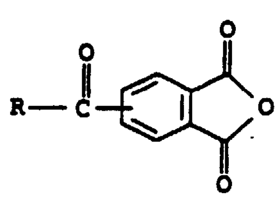

**(II)**

where R is Cl, Br, $C_1$-$C_{10}$-alkoxy, which may be either unsubstituted or substituted, or $C_6$-$C_{10}$-aryloxy, which may be either unsubstituted or substituted.

**2.** A molding material as claimed in claim 1, based on polyarylene ethers A containing

from 5 to 95 mol % of repeating units $I_1$

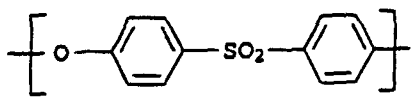

(I₁)

and

from 5 to 95 mol % of repeating units $I_2$

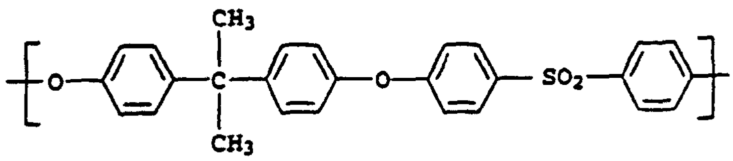

($I_2$) .

3. A molding material as claimed in claim 1 or 2, wherein trimellitic anhydride chloride ($II_1$) or trimellitic anhydride n-butyl ester (II2)

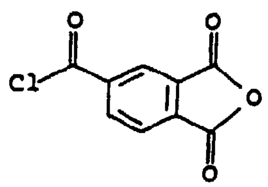

or

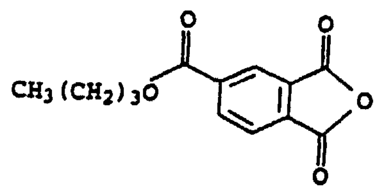

($II_1$) ($II_2$)

is used as the anhydride compound.

4. A molding material as claimed in any of claims 1 to 3, containing, based on the sum of the components A to C,

A) from 5 to 99% by weight of polyarylene ethers A,

B) from 0 to 90% by weight of polyarylene ethers B having terminal groups which differ from those of the polyarylene ethers A and having repeating units III

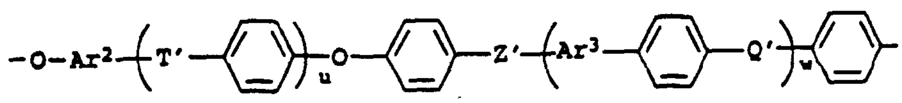

(III)

in which u and w may each be an integer 0, 1, 2 or 3, T', Q' and Z' may each be a chemical bond or a group selected from -O-, -S-, $-SO_2-$, S=O, -N=N-, $-R^aC=CR^b-$ and $-CR^cR^d-$, with the proviso that at least one of the groups T', Q' or Z' is $-SO_2-$ or C=O,

$R^a$ and $R^b$ are each hydrogen or $C_1$-$C_{10}$-alkyl,

$R^c$ and $R^d$ are each hydrogen or a $C_1$-$C_{10}$-alkyl, $C_1$-$C_{10}$-alkoxy or $C_6$-$C_{18}$-aryl group, where the above-mentioned groups may each be substituted by fluorine and/or chlorine and

$Ar^1$ and $Ar^2$ are each $C_6$-$C_{18}$-aryl which may have substituents selected from the group consisting of $C_1$-$C_{10}$-alkyl, $C_6$-$C_{18}$-aryl, $C_1$-$C_{10}$-alkoxy and halogen,

C) from 1 to 45% by weight of fibrous or particulate reinforcing agents or fillers or mixtures thereof,

the amounts of the components A to C summing to 100% by weight in each case.

5. A molding material as claimed in any of claims 1 to 3, containing, based on the sum of the components A to E,

A) from 1 to 99% by weight of polyarylene ethers A,
B) from 0 to 90% by weight of polyarylene ethers B,
C) from 0 to 45% by weight of fibrous or particulate reinforcing agents or fillers or mixtures thereof,
D) from 1 to 99% by weight of thermoplastic polyamides D and
E) from 0 to 25% by weight of rubber impact modifiers E.

6. A molding material as claimed in claim 5, containing a polyamide D comprising, based on the polyamide D,

from 40 to 90% by weight of units which are derived from terephthalic acid and hexamethylenediamine,
from 0 to 50% by weight of units which are derived from ε-caprolactam and/or
from 0 to 60% by weight of units which are derived from adipic acid and hexamethylenediamine.

7. A process for the preparation of a molding material based on polyarylene ethers A having terminal anhydride groups and repeating units I

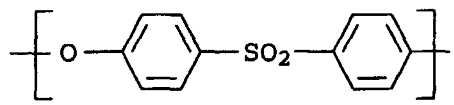

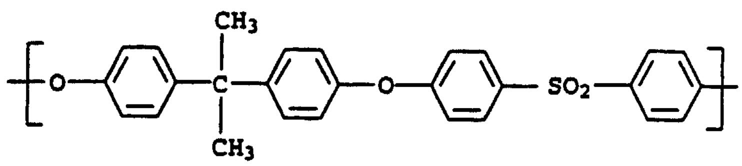

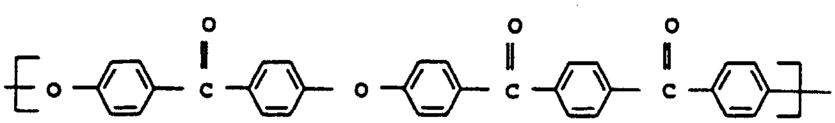

or

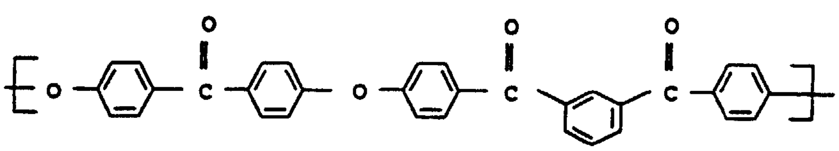

or random copolymers or block copolymers thereof, the polyarylene ethers A also being present as copolymers or block copolymers with other thermoplastic polymers,
wherein polyarylene ethers having terminal hydroxyl groups and repeating units I are reacted with anhydride compounds of the formula II.

8. The use of a molding material as claimed in claim 1 for the production of a heat-stable adhesive.

9. A heat-stable adhesive obtainable using a molding material as claimed in claim 1 as an essential component.

**Revendications**

**1.** Masses à mouler à base d'éthers de polyarylène A comportant des groupes terminaux anhydride et des unités répétitives I :

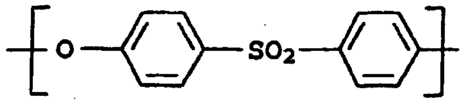

($I_1$)

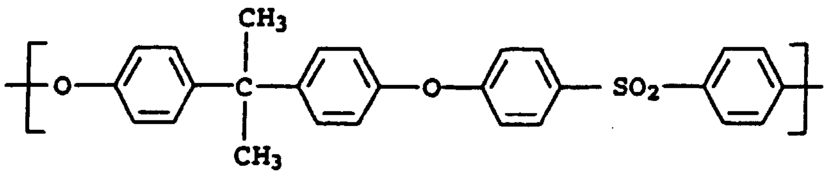

($I_2$)

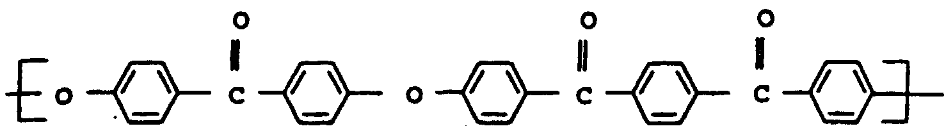

($I_3$)

ou

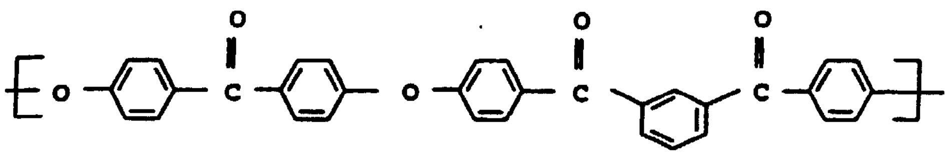

($I_4$)

que l'on peut obtenir par réaction d'éthers de polyarylène comportant des groupes terminaux hydroxy et des unités répétitives I avec des composés anhydride de la formule générale II :

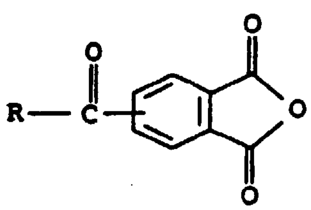

(II)

dans laquelle R représente Cl, Br, un groupe alcoxy en $C_1$ à $C_{10}$, qui peut aussi bien être substitué que non substitué, ou un groupe aryloxy en $C_6$ à $C_{10}$, qui peut aussi bien être substitué que non substitué.

**2.** Masses à mouler suivant la revendication 1, à base d'éthers de polyarylène A comportant

5 à 95 moles % d'unités répétitives $I_1$ :

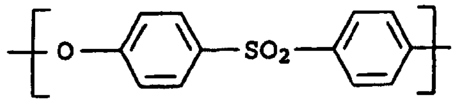

$(I_1)$

et

5 à 95 moles % d'unités répétitives $I_2$ :

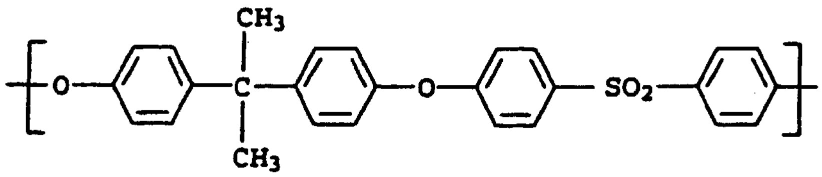

$(I_2)$

3. Masses à mouler suivant l'une des revendications 1 et 2, dans lesquelles, comme composé anhydride, on met en oeuvre du chlorure d'anhydride trimellitique $(II_1)$ ou de l'ester n-butylique d'anhydride trimellitique $(II_2)$ :

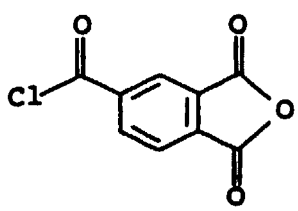

ou

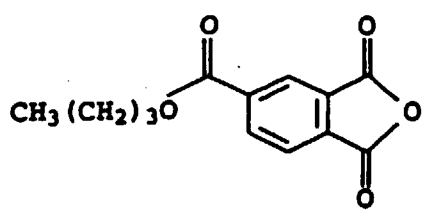

$(II_1)$ $(II_2)$

4. Masses à mouler suivant l'une des revendications 1 à 3, contenant, par rapport à la somme des composants A à C,

A) 5 à 99% en poids d'éther de polyarylène A,

B) 0 à 90% en poids d'éther de polyarylène B comportant des groupes terminaux, qui se différencient de ceux des éthers de polyarylène A, et des unités répétitives III :

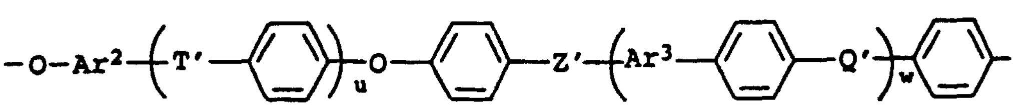

(III)

où u et w peuvent chacun représenter un nombre entier 0, 1, 2 ou 3,

T', Q' et Z' peuvent être chacun une liaison chimique ou un groupe choisi parmi -O-, -S-, $-SO_2-$, S=O, -N=N-, $-R^aC=CR^b$ et $-CR^cR^d-$, à la condition qu'au moins un des groupes T', Q' ou Z' représente $-SO_2-$ ou C=O,

$R^a$ et $R^b$ représentent chacun un atome d'hydrogène ou un groupe alkyle en $C_1$ à $C_{10}$,

$R^c$ et $R^d$ représentent chacun un atome d'hydrogène, un groupe alkyle en $C_1$ à $C_{10}$, un groupe alcoxy en $C_1$ à $C_{10}$ ou un groupe aryle en $C_6$ à $C_{18}$, les groupes précités pouvant chacun être substitués par des atomes de fluor et/ou de chlore,

$Ar^1$ et $Ar^2$ représentant des groupes aryle en $C_6$ à $C_{18}$, ces derniers pouvant avoir des substituants choisis parmi de l'alkyle en $C_1$ à $C_{10}$, de l'aryle en $C_6$ à $C_{18}$, de l'alcoxy en $C_1$ à $C_{10}$ et de l'halogène,

C) 1 à 45% en poids de matières de renforcement ou de remplissage en forme de fibres ou de particules ou leurs mélanges,

la somme des composants A à C donnant chaque fois 100% en poids.

**5.** Masses à mouler suivant l'une des revendications 1 à 3, contenant, par rapport à la somme des composants A à E,

A) 1 à 99% en poids d'éther de polyaryléne A,
B) 0 à 90% en poids d'éther de polyarylène B,
C) 0 à 45% en poids de matière de renforcement ou de remplissage en forme de fibres ou de particules ou de leurs mélanges,
D) 1 à 99% en poids de polyamides thermoplastiques D, et
E) 0 à 25% en poids de caoutchoucs modificateurs de résistance au choc E.

**6.** Masses à mouler suivant la revendication 5, contenant des polyamides D à base, par rapport aux polyamides D,

de 40 à 90% en poids d'unités, qui dérivent d'acide téréphtalique et d'hexaméthylènediamine,
de 0 à 50% en poids d'unités, qui dérivent de ε-caprolactame, et/ou
de 0 à 60% en poids d'unités, qui dérivent d'acide adipique et d'hexaméthylènediamine.

**7.** Procédé de préparation de masses à mouler à base d'éthers de polyaryléne A comportant des groupes terminaux anhydride et des unités répétitives I :

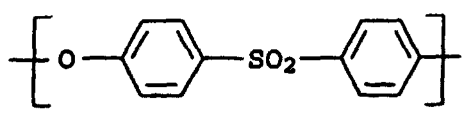

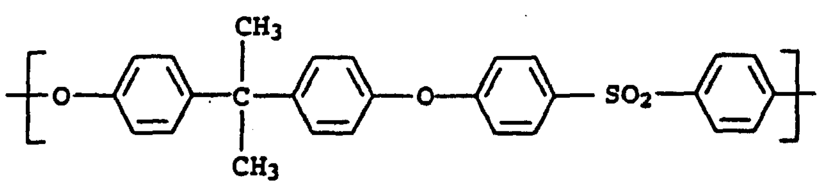

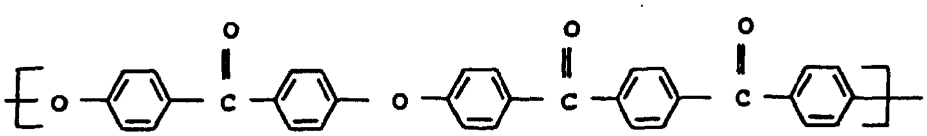

ou

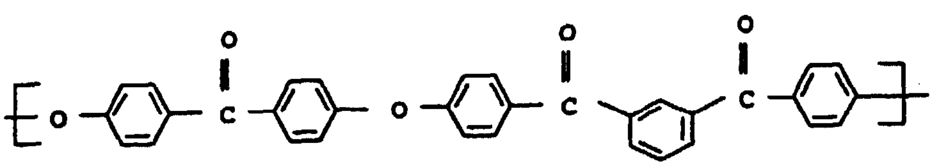

ou de leurs copolymères statistiques ou copolymères blocs, les éthers de polyarylène A se présentant aussi sous la forme de copolymères ou de copolymères blocs avec d'autres polymères thermoplastiques,

caractérisé en ce qu'on fait réagir des éthers de polyarylène comportant des groupes terminaux hydroxy et des unités répétitives I avec des composés anhydride de la formule générale II.

**8.** Utilisation des masses à mouler suivant la revendication 1, pour la préparation d'adhésifs thermostables.

**9.** Adhésifs thermostables que l'on peut obtenir par l'utilisation des masses à mouler suivant la revendication 1, comme composant essentiel.